# FASCICULE DE BREVET EUROPEEN

(11) **EP 1 537 738 B1**
(45) Date de publication et mention de la délivrance du brevet: **16.12.2009**
(21) Numéro de dépôt: 03787975.6
(22) Date de dépôt: 14.08.2003
(51) Int. Cl.: H04N 7/10, H04N 7/16, H04N 7/167

(54) **METHODE DE VERIFICATION DE LA VALIDITE D'UNE CLE POUR UN RESEAU DOMESTIQUE NUMERIQUE**
SCHLÜSSELGÜLTIGKEITSPRÜFUNGSMETHODE FÜR EIN DIGITALES HEIMNETZWERK
METHOD FOR VERIFYING VALIDITY OF DOMESTIC DIGITAL NETWORK KEY

(30) Priorité: 19.08.2002 CH 20021403
(43) Date de publication de la demande: 08.06.2005
(73) Titulaire: Nagravision SA, 1033 Cheseaux-sur-Lausanne (CH)
(72) Inventeur: LE BUHAN, Corinne, CH-1619 Les Paccots (CH); KSONTINI, Rached, CH-1004 Lausanne (CH)
(74) Mandataire: Wenger, Joel-Théophile
(86) Numéro de dépôt international: PCT/IB2003/003767
(87) Numéro de publication internationale: WO 2004/017635

(56) Documents cités:
- EP-A- 1 079 628
- WO-A-00/56068
- WO-A-01/99422

## Description

La présente invention concerne une méthode de sécurisation dans un réseau domestique numérique. Plus particulièrement, la méthode de l'invention s'articule sur des réseaux uniques d'appareils dont les contenus sont personnalisés.

Un réseau domestique numérique est un ensemble d'appareils audio-visuels reliés par des interfaces numériques. Ces appareils incluent par exemple des décodeurs numériques, téléviseurs numériques, lecteurs / enregistreurs de DVD, appareils de stockage munis de disques durs, enregistreurs audio MP3, des livres électroniques, consoles de jeux, ordinateurs ou autres plate-formes permettant l'accès à Internet.

La technologie numérique donne la possibilité d'effectuer des copies de contenus (films, musique, jeux vidéos, logiciels...) qui sont de même qualité que l'original. Ces copies parfaites impliquent des conséquences néfastes pour l'industrie au niveau des droits d'auteurs si une protection efficace n'est pas disponible.

Le contenu original arrive dans la maison par diverses sources: il peut être transmis par voie hertzienne, par le satellite ou le câble, par l'Internet ou être enregistré sur une cassette numérique, un DVD ou même un disque dur. Avant de fournir leur contenu aux distributeurs, les détenteurs des droits spécifient certaines conditions d'accès concernant la protection du contenu qui doivent donc être mises en vigueur par un système de protection du contenu à l'intérieur de la maison.

Un contenu peut, par exemple, être associé à des droits comme: "Lecture seule", "Copie pour usage privé", "Copie libre".

Un système de protection des contenus numérique va permettre aux propriétaires et distributeurs de contenus de lutter contre les pertes de revenus dues au piratage. Il est basé sur l'utilisation de modules de sécurité permettant une identification de chaque appareil connecté sur le réseau domestique et le décodage des données.

L'avantage d'un tel système est que le contenu est toujours conservé crypté dans le réseau numérique domestique jusqu'à ce qu'il soit lu. Le décryptage est réalisé en collaboration avec le module de sécurité amovible inséré dans l'appareil de lecture. Cette méthode simple offre une sécurité complète de l'encryptage.

Un tel système de protection est qualifié de "bout en bout", c'est-à-dire depuis l'entrée du contenu sur le réseau domestique numérique jusqu'à sa restitution, en passant par son stockage éventuel.

Avec ce système, les fournisseurs de contenus peuvent facilement choisir des droits pour les utilisateurs de données encryptées qui seront appliqués au réseau domestique.

Une possibilité de dupliquer et de gérer des contenus numériques à l'intérieur de son réseau est ainsi offerte à l'utilisateur dans le cadre des droits définis par les fournisseurs de contenus. Elle permet à l'utilisateur de partager le contenu enregistré sur n'importe quel appareil numérique fixe ou portable connecté, tout en empêchant la redistribution de ce contenu à l'extérieur de son réseau personnel.

Le système crée un environnement sécurisé: il permet d'enregistrer des contenus cryptés, mais en interdit la lecture si le contenu n'est pas légitime. Un contenu illégitime est une copie non autorisée par le détenteur des droits associés. Par exemple, un disque copié à partir d'un original sur un appareil appartenant à un réseau A ne pourra pas être lu par un appareil connecté à un réseau B.

Tout contenu non gratuit est associé à un réseau domestique donné et, par conséquent, ne peut être utilisé que sur ce même réseau. L'identité au réseau est assurée par les modules de sécurité qui, du fait qu'ils sont amovibles, permettent une certaine mobilité.

Cependant, un réseau domestique peut également comprendre des appareils mobiles externes associés à ce réseau, par exemple un lecteur de musique portable ou un appareil dans une voiture, ainsi que des appareils dans une résidence secondaire qui appartient au propriétaire du réseau initial. Autrement dit, les contenus sont protégés par la même clé dès que les appareils externes ont été connectés au moins une fois au réseau de référence. Il n'est donc pas nécessaire d'avoir une connexion permanente. Tous ces appareils partagent une clé propre à un réseau privé domestique, sur lequel le contenu est disponible pour un usage privé, mais seulement selon les droits associés.

Le système de protection dont les principes sont évoqués ci-dessus est décrit dans le document de Thomson Multimedia SA: "SmartRight™, A Content Protection System for Digital Home Networks, White Paper" publié en octobre 2001.

Selon une configuration particulière, le point d'entrée d'un réseau domestique numérique est constitué d'un décodeur ("Set-Top-Box") qui reçoit un flux de données crypté à partir d'un satellite, d'un câble, voire par le biais d'Internet. Ce décodeur est muni d'un module de sécurité en général sous forme d'une carte à puce appelée module convertisseur. Le rôle de ce module consiste à traiter les conditions définies par le contrôle d'accès du fournisseur d'accès conditionnel donc à décrypter les messages de contrôle (ECM) contenant les mots de contrôle (CW) permettant le déchiffrement du contenu si les droits sont présents dans ce module. Dans l'affirmative, ce module réencrypte les mots de contrôle (CW) grâce à une clé de session générée aléatoirement par le module. Ce module joint aux mots de contrôle (CW) la clé de session encryptée par la clé de réseau pour former des messages de contrôle locaux (LECM).

Selon une deuxième possibilité, le point d'entrée est un lecteur de données tel qu'un lecteur DVD. Les données sont stockées sous forme encryptée et un module dans le lecteur dispose des capacités pour décrypter ces données. Une fois décryptées, elles sont re-encryptées selon le réseau local connecté et diffusées dans ce réseau. Selon le mode d'opération, il est possible de ne pas décrypter les données mais de traiter que la ou les clés d'encryption. En effet, une technique connue consiste à encrypter les données par un ou des clés de session (donc déterminée aléatoirement) et d'encrypter ces clés par une clé propre au système et connue du lecteur de DVD. Le lecteur décrypte l'ensemble des clés et re-encrypte cet ensemble grâce à la clé locale. Les données proprement dites ne sont pas traitées et restent sous leur forme originale. Dans cette forme d'exécution, le module convertisseur est le module qui contient les moyens pour décrypter l'ensemble des clés et les encrypter pour le réseau local.

Dans les deux cas cités ci-dessus, on parlera de dispositif de diffusion puisque sa fonction principale est de diffuser des données dans un réseau local.

La clé de réseau est une clé propre à un réseau donné. Elle est générée dans le réseau au moyen d'un module de sécurité appelée module terminal associée au premier appareil de visualisation du contenu se connectant au réseau. Ce dernier module est le seul capable d'initialiser le réseau. Un module terminal additionnel reçoit ensuite la clé de réseau de la part du premier appareil. Ce module terminal est en général sous forme d'une carte à puce ou peut être un circuit monté directement dans le dispositif de traitement.

Par contre, la clé de réseau n'est pas connue du module convertisseur afin d'éviter d'y concentrer tous les secrets, ce qui en ferait une cible privilégiée d'attaque pour les pirates. Par conséquent, un mécanisme de communication sécurisé doit être mis en place entre un module terminal et le module convertisseur pour que cette dernière puisse insérer la clé de session encryptée par la clé de réseau dans les messages de contrôle (LECM) qu'elle génère.

A cette fin, le module terminal échange avec le module convertisseur une clé publique connue du module terminal et une clé de session générée aléatoirement par le module convertisseur. Le module terminal transmet sa clé publique au module convertisseur qui retourne la clé de session cryptée avec la clé publique. Le module terminal décrypte alors la clé de session, puis retransmet au module convertisseur cette clé de session cryptée avec la clé de réseau.

Le module convertisseur encrypte d'une part les mots de contrôle (CW) à l'aide de la clé de session et d'autre part, elle y joint la clé de session cryptée avec la clé de réseau (provenant d'un des modules terminal) pour former les messages de contrôle locaux (LECM). Ces messages (LECM) sont alors transmis avec le contenu crypté aux différents appareils du réseau pour stockage ou visualisation.

Chaque appareil terminal connecté au réseau peut donc décrypter les messages (LECM) et en extraire les mots de contrôle (CW) car il possède la clé de réseau et il reçoit la clé de session cryptée par la clé de réseau. Il peut ensuite, à l'aide de ces mots de contrôle (CW), décrypter le flux de données. Ces appareils sont dit dispositif de traitement.

Ce procédé d'introduction d'une clé de réseau contenue dans une carte terminal présente un inconvénient par le fait qu'il est techniquement possible d'initialiser une multitude de réseaux domestiques au moyen d'un module terminal falsifié. En effet, dans le système de protection connu, la clé de réseau n'est pas contenue en tant que telle dans le module convertisseur, mais seulement sous la forme d'une clé de session cryptée par la clé de réseau. Des réseaux non autorisés ainsi établis peuvent posséder donc tous la même clé et par conséquent, les contenus enregistrés dans les appareils peuvent être redistribués et exploités en dehors du nombre limité de membres tels que défini dans la norme d'un réseau domestique.

De plus, une clé de réseau tierce non reconnue par le fournisseur de contenu peut être introduite dans un module terminal permettant la création d'un réseau dont les droits attribués aux contenus ne sont plus gérés par le détenteur.

Le document WO00/56068, qui est considéré comme étant l'état de la technique le plus proche, décrit une méthode implémentée dans un système de protection pour réseau domestique numérique (« global protection system for home networks ») avec un cryptage et décryptage local de messages de contrôle (ECM) en utilisant une clé locale (« rebundled descrambling key », « LECM ») et donne d'autres détails sur l'état de la technique précédemment décrit.

Le but de la présente invention est de pallier les inconvénients décrits ci-dessus en proposant une méthode de contrôle de la conformité de la clé de réseau.

Ce but est atteint par une méthode de vérification de la validité d'une clé de réseau dans un réseau domestique numérique comprenant au moins un dispositif de diffusion et un dispositif de traitement, le dispositif de diffusion disposant de données encryptées à diffuser vers le dispositif de traitement, ces données étant accessibles par le dispositif de traitement grâce à une clé de réseau inconnue du dispositif de diffusion, cette méthode comprenant les étapes suivantes:
- transmission par le dispositif de diffusion d'une clé de test au dispositif de traitement,
- calcul d'un cryptogramme résultant de l'encryption de la clé de test par la clé de réseau dans le dispositif de traitement,
- envoie du cryptogramme au dispositif de diffusion,
- détermination par le dispositif de diffusion de la validité de la clé de réseau en comparant le cryptogramme avec une liste de cryptogrammes valide et/ou invalide.

La méthode s'applique généralement lors de transfert de données provenant d'une source à accès conditionnel vers un réseau domestique. Il s'agit de vérifier l'authenticité d'une clé de réseau par l'intermédiaire de données de contrôle pertinentes fournies par un centre de vérification en général sous forme d'une liste.

La méthode est basée sur la vérification de la présence ou de l'absence d'un cryptogramme donné sur une liste de contrôle: le cryptogramme étant constitué à partir d'une clé de test, fournie par le centre de vérification, encryptée à l'aide d'une clé de réseau d'un module terminal d'un appareil connecté au réseau.

La liste de contrôle fournie par le centre de vérification contient des cryptogrammes créés soit avec des clés de réseau invalides ("black list"), soit avec des clés valides ("white list"). Une clé de réseau contenue dans un module terminal sera donc valide seulement si son cryptogramme correspondant est absent d'une "black list" ou présent dans une "white list".

Dans le cas d'un lecteur de DVD, les données du film par exemple sont accompagnées par un fichier de cryptogrammes invalides (ou valides) et la comparaison peut s'effectuer de la même manière que pour un décodeur.

Selon une première variante, les données permettant de vérifier une clé de réseau comprennent une clé de test et un ensemble de cryptogrammes, c'est-à-dire le résultat de l'encryption de la clé de test avec toutes les clés de réseau valides ou invalides. La clé de test est envoyée au dispositif de traitement et le cryptogramme renvoyé est comparé avec cette liste.

Selon une seconde variante, les données permettant de vérifier une clé de réseau comprennent l'ensemble des clés de réseau invalides. La clé de test est générée aléatoirement par le dispositif de diffusion et transmis au dispositif de traitement. Le cryptogramme renvoyé est stocké et comparé avec les cryptogrammes générés par le dispositif de diffusion en encryptant la clé de test avec chaque clé de réseau invalide.

Pour la suite de l'exposé, il sera fait plus particulièrement mention du module convertisseur localisé dans le dispositif de diffusion pour les opérations de vérification. De même, le module terminal effectue les opérations pour le compte du dispositif de traitement avec lequel ce module est relié.

Selon un mode de réalisation, une fois la vérification passée avec succès, le module convertisseur génère une clé de session, clé qui sera transmise de manière sécurisée au module terminal d'un des appareils. Cette clé de session est alors encryptée par la clé de réseau du module terminal pour former un cryptogramme qui est renvoyé au module convertisseur. Le module convertisseur va utiliser cette clé de session pour encrypter les mots de contrôle (CW), et les transmettre soit vers un dispositif de traitement, soit vers un dispositif de stockage accompagné du cryptogramme.

Si la comparaison est négative, le module convertisseur stoppe la génération du flux de données de contrôle accompagnant le contenu et permettant son déchiffrement au sein du réseau domestique. Un message d'erreur invite l'utilisateur à changer de module terminal. Dans une variante où le décodeur possède un canal de retour, ce message peut être aussi transmis au centre de vérification pour signaler un module terminal non valide.

Selon cette méthode la clé de session est remplacée dans une phase de test, par une clé de test à valeur prédéfinie. La clé de test joue alors un rôle analogue à celui de la clé de session du procédé d'initialisation décrit plus haut.

L'invention sera mieux comprise grâce à la description détaillée qui va suivre et qui se réfère aux figures annexées servant d'exemple nullement limitatif, à savoir:
- La figure 1 représente une communication typique entre un module terminal et un module convertisseur selon la méthode de l'état de la technique.
- La figure 2 représente une communication typique entre un module terminal et un module convertisseur selon la méthode de l'invention.

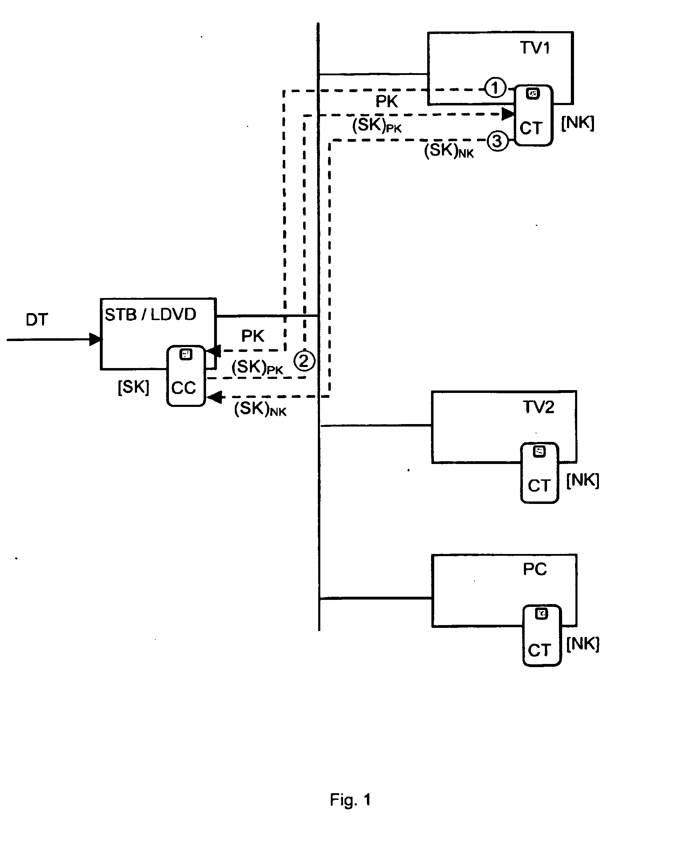

Le réseau domestique numérique illustré par la figure 1 est composé d'un décodeur (STB), des téléviseurs (TV1, TV2) et d'un ordinateur (PC). Chaque appareil est muni d'une carte à puce amovible servant de module de sécurité chargé de l'encryptage /décryptage des données du réseau. Selon une variante particulière, le module de la carte à puce peut être directement monté dans l'appareil de manière permanente.

Selon une réalisation préférée, la carte associée au décodeur (STB) est un module convertisseur (CC) qui transforme des messages de contrôles ECM (Entitlement Control Message) reçus par le décodeur en ECM locaux (LECM) propres au réseau. Ces derniers contiennent les clés de décryptage ou mots de contrôle (CW) du flux de données (DT) provenant du centre de gestion encryptés par une clé de transmission (TK). Les ECM locaux (LECM) contiennent également les mots de contrôle (CW) du flux de données (DT) encryptés avec une clé de session locale, mais ils contiennent aussi cette clé de session (SK)encryptée par la clé de réseau (NK).

Les cartes associées aux appareils de visualisation (TV1, TV2, PC) appartenant au réseau sont des modules terminal (CT) qui permettent le décryptage des données du réseau au niveau des appareils (TV1, TV2, PC) grâce à la clé de réseau (NK) stockée dans chaque module.

La liaison entre un réseau à accès conditionnel et un réseau domestique s'effectue par la connexion d'un appareil par exemple (TV1) au décodeur (STB). Lorsque le module convertisseur (CC) associée au décodeur (STB) doit transformer des messages de contrôles ECM (Entitlement Control Message) en des ECM locaux (LECM) propres au réseau, un dialogue s'établit entre le module terminal (CT) associée à l'appareil (TV1) et le module convertisseur (CC). Ce dialogue s'effectue de manière sécurisée en utilisant une paire de clés asymétriques (clé publique et clé privée) propre au module terminal (CT); il se résume en 3 étapes (1, 2, 3) comme suit:
1).- Le module terminal du premier appareil transmet sa clé publique (PK) au module convertisseur (CC) du décodeur (STB).
2).- Le module convertisseur (CC) génère aléatoirement une clé de session (SK) qu'elle crypte avec la clé publique (PK) précédemment reçue. Le module convertisseur (CC) transmet alors la clé encryptée (SK)_{PK} au module terminal (CT).
3).- Le module terminal (CT) décrypte la clé de session (SK) en utilisant sa clé privée associée à la clé publique (PK). Elle encrypte ensuite la clé de session (SK) au moyen de la clé de réseau (NK) qu'elle stocke en permanence. Le message résultant (SK)_{NK} est transmis au module convertisseur (CC).

Les messages de contrôle locaux (LECM) comprennent finalement des mots de contrôle (CW) encryptés par une clé de session (SK) et cette clé (SK) encryptée par la clé de réseau (NK).

Le téléviseur (TV1) muni de son module terminal (CT) est alors capable de décrypter les messages de contrôle locaux (LECM) grâce à la clé de réseau (NK) qui sert à décrypter la clé de session (SK). Cette dernière permet ensuite la décryption de mots de contrôle (CW) servant à décrypter les données vidéo / audio destinées au téléviseur.

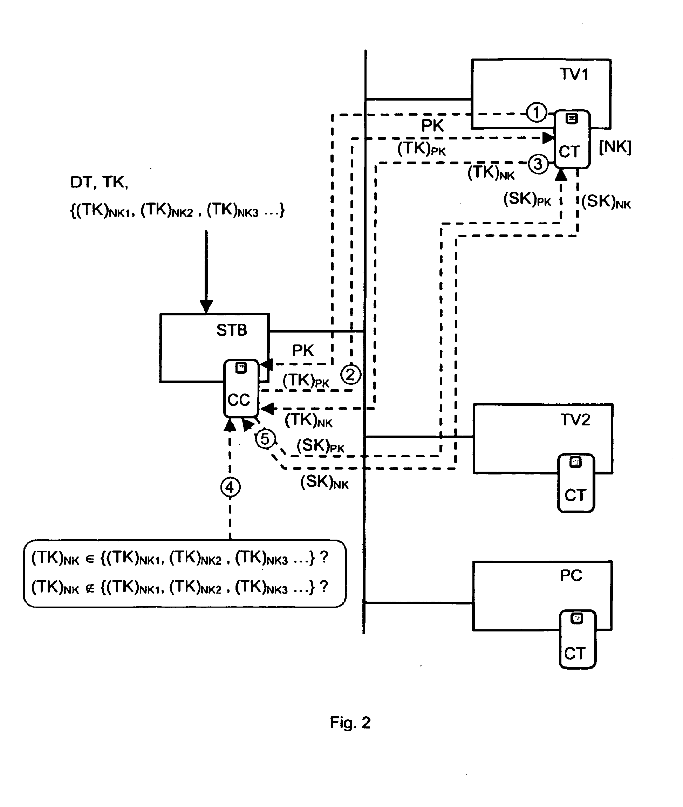

La figure 2 illustre le procédé d'initialisation de la communication selon l'invention dont les étapes se différencient par rapport aux précédentes par le fait que la clé de session (SK) est remplacée, dans une première phase, par une clé de test (TK). Pour cela, le décodeur (ou plus généralement le dispositif de diffusion) dispose d'une liste de contrôle {(TK)_{NK1}, (TK)_{NK2} , (TK)_{NK3} ...} de cryptogrammes et d'une clé de test; l'exemple ci-dessous concerne la variante avec une clé de test unique pour tous les cryptogrammes :
1).- Le module terminal (CT) du premier appareil transmet sa clé publique (PK) au module convertisseur (CC) du décodeur (STB).
2).- Le module convertisseur (CC) (ou le dispositif de diffusion grâce à sa mémoire plus étendue) dispose d'une liste de contrôle {(TK)_{NK1}, (TK)_{NK2} , (TK)_{NK3} ...} ainsi qu'une clé de test (TK). Le module convertisseur (CC) crypte la clé de test (TK) avec la clé publique (PK) reçue du module terminal (CT), ce qui donne un nouveau message (TK)_{PK} qui sera retransmis au module terminal (CT).
3).- Le module terminal (CT) décrypte la clé de test (TK) en utilisant sa clé privée associée à la clé publique (PK). Elle encrypte ensuite la clé de test (TK) au moyen de la clé de réseau (NK) qu'elle stocke en permanence. Le cryptogramme résultant (TK)_{NK} est transmis au module convertisseur (CC).
4).- Le module convertisseur compare le cryptogramme constitué par la clé de test cryptée par la clé de réseau (TK)_{NK} avec ceux répertoriés dans la liste de contrôle {(TK)_{NK1}, (TK)_{NK2} , (TK)_{NK3} ...} qui peut être soit une liste noire (black list) ou liste des valeurs non autorisées, soit une liste blanche (white list) ou liste des valeurs autorisées.
   Un cryptogramme (TK)_{NK} contenu dans une liste noire ou absente d'une liste blanche est invalide; cela signifie que la clé de réseau (NK) utilisée pour l'encryptage de la clé de test (TK) est refusée. Une signalisation adéquate, sous forme d'un message d'erreur par exemple, invite l'utilisateur à changer de carte et à recommencer l'opération de connexion.
   Un cryptogramme (TK)_{NK} appartenant à une liste blanche ou absente d'une liste noire est par contre accepté. Dans ce cas, le module convertisseur (CC) génère aléatoirement une clé de session (SK) qu'elle crypte avec la clé publique (PK) précédemment reçue. Le module convertisseur transmet alors le clé encryptée (SK)_{PK} au module terminal (CT).
5).- Le module terminal (CT) décrypte la clé de session (SK) en utilisant sa clé privée associée à la clé publique (PK). Elle encrypte ensuite la clé de session (SK) au moyen de la clé de réseau (NK) qu'elle stocke en permanence. Le message résultant (SK)_{NK} est transmis au module convertisseur (CC).

En général, le module convertisseur (CC) vérifie l'authenticité des données de contrôle reçues au moyen d'une signature sécurisée provenant du centre de vérification.

Il est à noter que le traitement du cryptogramme reçu peut se faire postérieurement et dans l'intervalle, le module convertisseur autorise la diffusion de données vers le dispositif de traitement. L'exploitation des données comme par exemple la diffusion d'un film dure suffisamment longtemps pour permettre les opérations de comparaison avec un grand nombre de cryptogrammes. Ceci est particulièrement le cas où le module convertisseur dispose des clés de réseau à invalider et qu'il doit donc calculer pour chaque clé de réseau le cryptogramme correspondant.

Selon une variante de l'invention, la liste de contrôle {(TK)_{NK1}, (TK)_{NK2} , (TK)_{NK3} ...} est stockée dans une mémoire du décodeur après réception (ou plus généralement du dispositif de diffusion tel qu'un lecteur de DVD), car elle peut constituer un fichier trop important pour être stocké dans le module convertisseur (CC). La comparaison du cryptogramme (TK)_{NK} avec ceux contenus dans la liste {(TK)_{NK1}, (TK)_{NK2} , (TK)_{NK3}
... } est effectuée par le décodeur (STB). Dans cette variante, en particulier pour un lecteur de DVD (LDVD), la liste peut être actualisée avec les DVD les plus récents. Ainsi, lorsqu'un ancien DVD est inséré, ce n'est plus la liste qui lui est attachée qui sera utilisée mais la liste la plus récente provenant d'un DVD récent, stockée dans le dispositif du diffusion.

Selon une autre variante le centre de vérification transmet, au lieu de la liste de contrôle {(TK)_{NK1}, (TK)_{NK2} , (TK)_{NK3} ...}, une adresse indiquant où cette liste peut être téléchargée via Internet. Cette variante nécessite, soit un décodeur (STB) disposant d'un canal de retour, soit un ordinateur possédant une connexion Internet. Le fichier sera alors soit stocké directement dans la mémoire du décodeur, soit transmis depuis l'ordinateur vers le décodeur.

Selon une autre variante, la clé de test cryptée avec la clé de réseau (TK)_{NK} est transmise de manière sécurisée par le module convertisseur (CC) via le décodeur (STB) vers un serveur adéquat ou vers le centre de vérification où la liste {(TK)_{NK1}, (TK)_{NK2} , (TK)_{NK3} ...} est stockée. La vérification de la validité de la clé (TK)_{NK} est donc effectuée en ligne et seul un message d'acceptation ou de refus, avec éventuellement une signature de la clé, sera alors retourné au module convertisseur (CC). L'avantage de cette variante est de décharger le décodeur de tâches qui peuvent devenir importantes surtout avec une liste dont la longueur ne peut que croître avec le nombre de réseaux domestiques installés.

L'avantage de la variante de la liste des clés de réseau à invalider est de pouvoir définir localement la clé de test. En effet, si cette clé de test est connue, il est possible de programmer un module terminal pour répondre par une valeur aléatoire lorsqu'il reçoit une telle clé et donc passer avec succès l'étape de vérification quand bien même sa clé de réseau est invalidée.

Bien entendu, le centre de vérification peut générer des fichiers dans lesquels une clé de test différente est utilisée mais cela nécessite de télécharger ces informations régulièrement dans chaque décodeur, solution impossible pour le cas d'un lecteur DVD.

C'est pourquoi, dans le cadre de l'invention, la clé de session générée aléatoirement par le module convertisseur peut également servir de clé de test. Si le module terminal n'utilise pas la clé de réseau pour encrypter cette clé de session afin de contourner l'étape de vérification, les données ultérieurement encryptées par cette clé de session ne pourront jamais être exploitées par le réseau local relié à ce module convertisseur. Le module terminal est obligé d'utiliser la clé de réseau et la vérification pourra s'effectuer par le module convertisseur grâce au calcul par ce dernier du cryptogramme de la clé de session avec toutes les clés de réseau invalidées.

Si l'on souhaite ne pas utiliser la clé de session comme clé de test, par exemple du fait que certains calculs sont exécutés dans le décodeur (ou lecteur DVD) et qu'il n'est pas souhaitable de sortir cette clé de session hors du module convertisseur, le protocole d'échange de données entre le module convertisseur et le module terminal peut comprendre l'envoi de plusieurs clés de session (par exemple trois) qui seront encryptées par la clé de réseau dans le module terminal. Les trois cryptogrammes sont renvoyés au module convertisseur qui va décider aléatoirement lequel va servir de clé de session, et lequel servira uniquement pour l'étape de vérification.

Bien qu'il soit sous-entendu que la méthode de vérification décrite ci-dessus est effectuée à chaque négociation d'une clé de session, il est possible de faire cette vérification à des intervalles plus grands. A cet effet, le module convertisseur mémorise l'identifiant du module terminal avec qui il a eu une liaison et n'a pas besoin de renouveler cette vérification tant que le module convertisseur diffuse des données vers le même module terminal.

## Revendications

1. Méthode de vérification de la validité d'une clé de réseau (NK) dans un réseau domestique numérique comprenant au moins un dispositif de diffusion (STB, LDVD) et un dispositif de traitement (TV1, TV2, PC), le dispositif de diffusion (STB, LDVD) disposant de données encryptées (DT) à diffuser vers le dispositif de traitement (TV1, TV2, PC), ces données étant accessibles par le dispositif de traitement grâce à une clé de réseau (NK) inconnue du dispositif de diffusion (STB, LDVD), cette méthode comprenant les étapes suivantes:
- transmission par le dispositif de diffusion (STB, LDVD) d'une clé de test (TK) au dispositif de traitement (TV1, TV2, PC),
- calcul d'un cryptogramme (TK_{NK}) résultant de l'encryption de la clé de test (TK) par la clé de réseau (NK) dans le dispositif de traitement (TV1, TV2, PC),
- envoi du cryptogramme (TK_{NK}) au dispositif de diffusion (STB, LDVD),
- détermination par le dispositif de diffusion de la validité de la clé de réseau en comparant le cryptogramme (TK_{NK}) avec une liste de cryptogrammes de contrôle {(TK)_{NK1}, (TK)_{NK2}, (TK)_{NK3} ...}.

2. Méthode de vérification selon la revendication 1, **caractérisé en ce que** la clé de test (TK) et la liste des cryptogrammes de contrôle {(TK)_{NK1}, (TK)_{NK2} , (TK)_{NK3} ...} constituent les données de contrôle et sont générées dans un centre de vérification et transférées dans le dispositif de diffusion.

3. Méthode de vérification selon la revendication 1, **caractérisé en ce que** la clé de test (TK) est déterminée par le dispositif de diffusion, la liste de cryptogrammes de contrôle {(TK)_{NK1}, (TK)_{NK2} , (TK)_{NK3} ...} est calculée par le dispositif de diffusion sur la base d'une liste de clés de réseau prédéterminée (NK1, NK2, NK3 ...) transmise par un centre de vérification et constituant les données de contrôle, chaque cryptogramme de contrôle (TK_{NKn}) étant le résultat de l'encryption d'une clé de réseau listée (NKn) par la clé de test (TK).

4. Méthode de vérification selon la revendication 3, **caractérisé en ce que** la clé de test (TK) est générée aléatoirement et sert également de clé de session (SK) pour l'encryption des données encryptées (DT).

5. Méthode de vérification selon les revendications 4 ou 3, **caractérisée en ce que** le dispositif de diffusion génère au moins deux clés de test (TK1, TK2, TKn) et les transmet au dispositif de traitement (TV1, TV2, PC), qui lui renvoie les cryptogrammes correspondants, le dispositif de diffusion sélectionnant un cryptogramme (TK1_{NK}) et sa clé de test (TK1) associée pour les opérations de vérification et un autre cryptogramme (TK2_{NK}) et sa clé de test (TK2) associée comme clé de session (SK) pour l'encryption des données (DT).

6. Méthode de vérification selon les revendications 2 à 5, **caractérisée en ce que** la liste des cryptogrammes de contrôle consiste en une liste noire (black list) {(TK)_{NK1}, (TK)_{NK2} , (TK)_{NK3} ...} contenant des cryptogrammes obtenus par l'encryption de la clé de test (TK) avec des clés de réseau invalides (NK1, NK2, NK3,...).

7. Méthode de vérification selon les revendications 2 à 5, **caractérisée en ce que** la liste des cryptogrammes de contrôle consiste en une liste blanche (white list) {(TK)_{NK1}, (TK)_{NK2} , (TK)_{NK3} ...} contenant des cryptogrammes (TK)_{NK} obtenus par l'encryption de la clé de test (TK) avec des clés de réseau valides (NK1, NK2, NK3,...).

8. Méthode de vérification selon les revendications 6 ou 7, **caractérisée en ce qu'**un cryptogramme présent (TK)_{NK} dans la liste noire ou absent de la liste blanche est refusé lors de la comparaison, une signalisation d'erreur invitant l'utilisateur à changer de module terminal (CT) est alors générée.

9. Méthode de vérification selon l'une des revendications précédentes, **caractérisée en ce que** le dispositif de diffusion comprend un module convertisseur (CC) en charge des opérations de vérification.

10. Méthode de vérification selon l'une des revendications précédentes, **caractérisée en ce que** le dispositif de traitement comprend un module terminal (CT) stockant la clé de réseau (NK).

11. Méthode de vérification selon la revendication 9, **caractérisée en ce que** la liste de contrôle {(TK)_{NK1}, (TK)_{NK2} , (TK)_{NK3} ...} est stockée dans une mémoire du dispositif de diffusion (STB, LDVD), la comparaison avec le cryptogramme (TK)_{NK} s'effectuant par ce dispositif.

12. Méthode de vérification selon les revendications 3 à 10, **caractérisée en ce que** les données de contrôle consistent en une adresse indiquant où la liste de contrôle {(TK)_{NK1}, (TK)_{NK2} , (TK)_{NK3} ...} peut être téléchargée via Internet au moyen du dispositif de diffusion, ladite liste {(TK)_{NK1}, (TK)_{NK2} , (TK)_{NK3} ...} est alors stockée dans la mémoire du dispositif de diffusion (STB, LDVD).

13. Méthode de vérification selon les revendications 3 à 12, **caractérisée en ce que** le module convertisseur (CC) vérifie l'authenticité de la liste de contrôle au moyen d'une signature sur lesdites données.

14. Méthode de vérification selon la revendication 1 **caractérisée en ce que** la liste de contrôle {(TK)_{NK1}, (TK)_{NK2} , (TK)_{NK3} ...} est stockée par un centre de vérification, le dispositif de diffusion transmettant le cryptogramme audit centre pour effectuer la vérification.

15. Méthode de vérification selon les revendications 3 à 11, **caractérisée en ce que** le dispositif de diffusion est un lecteur de disque DVD, ce disque comprenant d'une part les données encryptées (DT) et d'autre part les données de contrôle.

16. Méthode de vérification selon les revendications 3 à 14, **caractérisée en ce que** le dispositif de diffusion est un décodeur de télévision à péage recevant les données encryptées et les données de contrôle d'un centre de gestion.

## Claims

1. Validity verification method for a network key (NK) in a digital domestic network comprising at least a broadcasting device (STB, LDVD) and a processing device (TV1, TV2, PC), the broadcasting device (STB, LDVD) having encrypted data (DT) to broadcast to the processing device (TV1, TV2, PC), these data being accessible by the processing device thanks to a network key (NK) unknown by the broadcasting device (STB, LDVD), this method comprising following steps:
- transmitting a test key (TK) by the broadcasting device (STB, LDVD) to the processing device (TV1, TV2, PC),
- calculating a cryptogram (TK_{NK}) in the processing device (TV1, TV2, PC) resulting from the test key (TK) encryption by the network key (NK),
- sending the cryptogram (TK_{NK}) to the broadcasting device (STB, LDVD),
- determining the network key (NK) validity by the broadcasting device (STB, LDVD) by comparing the cryptogram (TK_{NK}) with a list of control cryptograms {(TK)_{NK1}, (TK)_{NK2}, (TK)_{NK3} ...}.

2. Verification method according to claim 1, **characterized in that** the test key (TK) and the list of control cryptograms {(TK)_{NK1}, (TK)_{NK2}, (TK)_{NK3} ...} constitute control data and are generated in a verification center and transferred in the broadcasting device (STB, LDVD).

3. Verification method according to claim 1, **characterized in that** the test key (TK) is determined by the broadcasting device, the list of control cryptograms {(TK)_{NK1}, (TK)_{NK2}, (TK)_{NK3} ...} is calculated by the broadcasting device on the base of a predetermined list of network keys (NK1, NK2, NK3,...) transmitted by a verification center and constituting the control data, each control cryptogram (TK_{NKn}) being the result of the encryption of a listed network key (NKn) with the test key (TK).

4. Verification method according to claim 3, **characterized in that** the test key (TK) is randomly generated and serves also as session key (SK) for the encryption of the encrypted data (DT).

5. Verification method according to claim 4 or 3, **characterized in that** the broadcasting device generates at least two test keys (TK1, TK2, TKn) and transmit them to the processing device (TV1, TV2, PC), which sends back to it the corresponding cryptograms (TK1_{NK}) and its associated test key (TK1) for the verification operations and an other cryptogram (TK2_{NK}) and its associated test key (TK2) as session key (SK) for the data (DT) encryption.

6. Verification method according to claims 2 to 5, **characterized in that** the list of control cryptograms consists of a black list {(TK)_{NK1}, (TK)_{NK2}, (TK)_{NK3} ...} containing the cryptograms obtained by the encryption of the test key (TK) with invalid network keys (NK1, NK2, NK3,...).

7. Verification method according to claims 2 to 5, **characterized in that** the list of control cryptograms consists of a white list {(TK)_{NK1}, (TK)_{NK2}, (TK)_{NK3} ...} containing the cryptograms (TK)_{NK} obtained by the encryption of the test key (TK) with valid network keys (NK1, NK2, NK3,...).

8. Verification method according to claims 6 or 7, **characterized in that** a cryptogram present (TK)_{NK} in the black list or absent from the white list is refused during the comparison, an error signalization inviting the user to change the terminal module (CT) is then generated.

9. Verification method according to one of the preceding claims, **characterized in that** the broadcasting device comprises a converter module (CC) in charge of the verification operations.

10. Verification method according to one of the preceding claims, **characterized in that** the processing device comprises a terminal module (CT) storing the network key (NK).

11. Verification method according to claim 9, **characterized in that** the control list { (TK)_{NK1}, (TK)_{NK2}, (TK)_{NK3} ...} is stored in a memory of the broadcasting device (STB, LDVD), the comparison with the cryptogram (TK)_{NK} is carried out by this device.

12. Verification method according to claims 3 to 10, **characterized in that** the control data consist of an address indicating where the control list {(TK)_{NK1}, (TK)_{NK2}, (TK)_{NK3} ...} can be downloaded via Internet by means of the broadcasting device, said list {(TK)_{NK1}, (TK)_{NK2}, (TK)_{NK3} ...} is then stored in the memory of the broadcasting device (STB, LDVD).

13. Verification method according to claims 3 to 12, **characterized in that** the converter module (CC) verifies the authenticity of the control list by means of a signature on said data.

14. Verification method according to claim 1 **characterized in that** the control list {(TK)_{NK1}, (TK)_{NK2}, (TK)_{NK3} ...} is stored by a verification center, the broadcasting device transmits the cryptogram to said center for carrying out the verification.

15. Verification method according to claims 3 to 11, **characterized in that** the broadcasting device is a DVD disc reader, this disc comprising on one hand the encrypted data (DT) and on the other hand the control data.

16. Verification method according to claims 3 to 14, **characterized in that** the broadcasting device is a pay television decoder receiving the encrypted data and the control data from a managing center.

## Patentansprüche

1. Verfahren zum Verifizieren der Gültigkeit eines Netzwerkschlüssels (NK) innerhalb eines räumlich begrenzten Datennetzwerks mit wenigstens einer Verteilervorrichtung (STB, LDVD) und mit einer Bearbeitungsvorrichtung (TV1, TV2, PC), wobei die Verteilervorrichtung (STB, LDVD) über verschlüsselte Daten (DT) verfügt, die zu der Bearbeitungsvorrichtung (TV1, TV2, PC) zu übertragen sind, wobei diese Daten für die Bearbeitungsvorrichtung aufgrund eines Netzwerkschlüssels (NK) zugänglich sind, der für die Verteilervorrichtung (STB, LDVD) unbekannt ist, wobei das Verfahren die folgenden Schritte aufweist:
- Übertragen eines Testschlüssels (TK) von der Verteilervorrichtung (STB, LDVD) zu der Bearbeitungsvorrichtung (TV1, TV2, PC),
- Berechnen eines sich aus der Verschlüsselung des Testschlüssels (TK) durch den Netzwerkschlüssel (NK) ergebenden Kryptogramms (TK_{NK}) in der Bearbeitungsvorrichtung (TV1, TV2, PC),
- Versenden des Kryptogramms (TK_{NK}) an die Verteilervorrichtung (STB, LDVD),
- Bestimmen der Gültigkeit des Netzwerkschlüssels durch die Verteilervorrichtung durch Vergleich des Kryptogramms (TK_{NK}) mit einer Kontrollkryptogrammliste {(TK)_{NK1}, (TK)_{NK2}, (TK)_{NK3} ...}.

2. Verfahren zum Verifizieren nach Anspruch 1, **dadurch gekennzeichnet, dass** der Testschlüssel (TK) und die Kontrollkryptogrammliste {(TK)_{NK1}, (TK)_{NK2}, (TK)_{NK3} ...} die Kontrolldaten bilden und in einem Verifikationszentrum verwaltet sowie der Verteilervorrichtung übermittelt werden.

3. Verfahren zur Verifikation nach Anspruch 1, **dadurch gekennzeichnet, dass** der Testschlüssel (TK) durch die Verteilervorrichtung bestimmt wird, dass die Kontrollkryptogrammliste {(TK)_{NK1}, (TK)_{NK2}, (TK)_{NK3} ...} durch die Verteilervorrichtung auf der Grundlage einer Liste von vorbestimmten Netzwerkschlüsseln (NK1, NK2, NK3 ...) berechnet wird, die durch ein Verifikationszentrum übertragen wird und die Kontrolldaten bildet, wobei jedes Kontrollkryptogramm (TK_{NKn}) das Resultat der Verschlüsselung eines gelisteten Netzwerkschlüssels (NKn) durch den Testschlüssel (TK) ist.

4. Verfahren zum Verifizieren nach Anspruch 3, **dadurch gekennzeichnet, dass** der Testschlüssel (TK) zufällig generiert und gleichermaßen als Sitzungsschlüssel (SK) für das Verschlüsseln der verschlüsselten Daten (DT) herangezogen wird.

5. Verfahren zum Verifizieren nach den Ansprüchen 4 oder 3, **dadurch gekennzeichnet, dass** die Verteilervorrichtung wenigstens zwei Testschlüssel (TK1, TK2, TKn) erzeugt und diese der Bearbeitungsvorrichtung (TV1, TV2, PC) überträgt, welche dieser die zugehörigen Kryptogramme zurückschickt, wobei die Verteilervorrichtung ein Kryptogramm (TK1_{NK}) und dessen zugehörigen Testschlüssel (TK1) für die Verifikationsvorgänge sowie ein weiteres Kryptogramm (TK2_{NK}) und dessen zugehörigen Testschlüssel (TK2) als Sitzungsschlüssel (SK) für die Verschlüsselung der Daten (DT) auswählt.

6. Verfahren zum Verifizieren nach den Ansprüchen 2 bis 5, **dadurch gekennzeichnet, dass** die Kontrollkryptogrammliste aus einer schwarzen Liste (black list) {(TK)_{NK1}, (TK)_{NK2}, (TK)_{NK3} ...} besteht, die die Kryptogramme enthält, die durch die Verschlüsselung des Testschlüssels (TK) mit ungültigen Netzwerkschlüsseln (NK1, NK2, NK3,...) erhalten worden sind.

7. Verfahren zum Verifizieren nach den Ansprüchen 2 bis 5, **dadurch gekennzeichnet, dass** die Kontrollkryptogrammliste aus einer weißen Liste (white list) {(TK)_{NK1}, (TK)_{NK2}, (TK)_{NK3} ...} besteht, die die Kryptogramme (TK)_{NK} enthält, die durch die Verschlüsselung des Testschlüssels (TK) mit gültigen Netzwerkschlüsseln (NK1, NK2, NK3,...) erhalten worden sind.

8. Verfahren zum Verifizieren nach den Ansprüchen 6 oder 7, **dadurch gekennzeichnet, dass** bei dem Vergleich ein Kryptogramm (TK)_{NK} zurückgewiesen wird, das in der schwarzen Liste vorhanden oder in der weißen Liste fehlt, wobei daraufhin eine Federanzeige generiert wird, die den Nutzer auffordert, ein Endmodul (CT) auszuwechseln.

9. Verfahren zum Verifizieren nach einem der vorangehenden Ansprüche, **dadurch gekennzeichnet, dass** die Verteilervorrichtung ein Konvertierungsmodul (CC) aufweist, das für Verifikationsoperationen verantwortlich ist.

10. Verfahren zum Verifizieren nach einem der vorangehenden Ansprüche, **dadurch gekennzeichnet, dass** die Bearbeitungsvorrichtung ein Endmodul (CT) aufweist, das den Netzwerkschlüssel (NK) speichert.

11. Verfahren zum Verifizieren nach Anspruch 9, **dadurch gekennzeichnet, dass** die Kontrollliste {(TK)_{NK1}, (TK)_{NK2}, (TK)_{NK3} ...} in einem Speicher der Verteilervorrichtung (STB, LDVD) gespeichert wird, wobei der Vergleich mit dem Kryptogramm (TK)_{NK} durch diese Vorrichtung durchgeführt wird.

12. Verfahren zum Verifizieren nach einem der Ansprüche 3 bis 10, **dadurch gekennzeichnet, dass** die Steuerdaten aus einer Adresse bestehen, die angibt, wo die Kontrollliste {(TK)_{NK1}, (TK)_{NK2}, (TK)_{NK3} ...} über das Internet mittels der Verteilervorrichtung heruntergeladen werden kann, wobei die Liste {(TK)_{NK1}, (TK)_{NK2}, (TK)_{NK3} ...} anschließend in dem Speicher der Verteilervorrichtung (STB, LDVD) gespeichert wird.

13. Verfahren zum Verifizieren nach den Ansprüchen 3 bis 12, **dadurch gekennzeichnet, dass** das Konvertierungsmodul (CC) die Authentizität der Steuerliste mittels einer Signatur der Daten verifiziert.

14. Verfahren zum Verifizieren nach Anspruch 1, **dadurch gekennzeichnet, dass** die Kontrollliste {(TK)_{NK1}, (TK)_{NK2}, (TK)_{NK3} ...} durch ein Verifikationszentrum gespeichert wird, wobei die Verteilervorrichtung das Kryptogramm zu diesem Zentrum übermittelt, um die Verifikation durchzuführen.

15. Verfahren zum Verifizieren nach den Ansprüchen 3 bis 11, **dadurch gekennzeichnet, dass** die Verteilervorrichtung ein DVD-Datenträgerlesegerät ist, wobei dieser Datenträger zum einen die verschlüsselten Daten (DT) und zum anderen die Kontrolldaten enthält.

16. Verfahren zum Verifizieren nach den Ansprüchen 3 bis 14, **dadurch gekennzeichnet, dass** die Verteilervorrichtung ein Decoder für Bezahltfernsehen ist, der die verschlüsselten Daten und die Kontrolldaten eines Verwaltungszentrums empfängt.
